(19) Europäisches Patentamt
European Patent Office
Office européen des brevets

(11) **EP 2 592 183 A1**

(12) **EUROPEAN PATENT APPLICATION**

(43) Date of publication:
**15.05.2013 Bulletin 2013/20**

(51) Int Cl.:
***D06F 37/22*** *(2006.01)*      ***D06F 37/26*** *(2006.01)*

(21) Application number: **12190829.7**

(22) Date of filing: **31.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.11.2011   KR 20110117287**

(71) Applicant: **Samsung Electronics Co., Ltd Gyeonggi-do 443-742 (KR)**

(72) Inventors:
• **Chang, Yun Joo**
  **Seoul (KR)**
• **Lee, Soon Oh**
  **Gyeonggi-do (KR)**
• **Jeoung, Jeoung Kyo**
  **Gyeonggi-do (KR)**
• **Wee, Hoon**
  **Gyeonggi-do (KR)**

(74) Representative: **Grünecker, Kinkeldey, Stockmair & Schwanhäusser**
  **Leopoldstrasse 4**
  **80802 München (DE)**

(54)    **Drum washing machine with dynamic vibration absorber**

(57)    A drum washing machine (1) provided with a dynamic absorber (20) capable of reducing the vibration of a low frequency band, the drum washing machine including a body (10), a drum (11) rotatably installed at an inside the body, a tub (12) installed to vibrate while surrounding the drum (11), and a dynamic absorber (20) installed at the tub (12) to directly reduce vibration delivered to the tub, wherein the dynamic absorber (20) includes a mass body (21) and an elastic member (40) configured to elastically support the mass body (21) for the mass body to move toward a direction of the vibration of the tub (12) to reduce the vibration of the tub.

FIG. 2

## Description

BACKGROUND

1. Field

The following description relates to a drum washing machine having a dynamic absorber capable of reducing vibration thereof.

2. Description of the Related Art

A drum washing machine is an apparatus capable of washing a laundry using electricity, and generally includes a tub configured to store washing water therein, a drum rotatably installed at an inside the tub and configured to accommodate laundry at an inside thereof, and a driving apparatus configured to drive the rotation of the drum, and the laundry is performed by the rotation of the drum by the driving apparatus.

However, the force generated during the rotation of the drum is delivered to the tub surrounding the drum, thereby generating vibration.

In order to reduce the vibration as such, a ball balancer may be provided. However, in a case when a ball is positioned in the same direction as the laundry at the uneven state during a transient state, that is, a range prior to the natural frequency of a system, the ball may cause the imbalance, resulting in increased vibration.

In addition, a dynamic absorber may be installed to the body and the tub of a drum washing machine in order to ease the vibration and noise of the tub as such. However, the natural frequency of the dynamic absorber is to reduce the vibration of a high frequency band, and thereby the vibration of a low frequency band may not be reduced.

In addition, in a case of a large-capacity drum washing machine, as the length of the tub is increased along with the increase of the capacity of the drum, the horizontal vibration of the rear surface of the tub is intensified during a resonance period at an initial stage of a spin-dry process, and thus, the horizontal vibration of the tub may result in a collision with the body of a drum washing machine.

SUMMARY

Therefore, it is an aspect of the present disclosure to provide a drum washing machine having a dynamic absorber capable of reducing the vibration of a low frequency band.

It is another aspect of the present disclosure to provide a drum washing machine capable of reducing the gap distance between a frame and a tub by reducing the excessive vibration of the tub, thereby increasing the washing capacity thereof.

Additional aspects of the disclosure will be set forth in part in the description which follows and, in part, will be apparent from the description, or may be learned by practice of the disclosure.

In accordance with an embodiment of the present disclosure, a drum washing machine includes a body, a drum, a tub, and a dynamic absorber. The drum may be rotatably installed at an inside the body. The tub may be installed to vibrate while surrounding the drum. The dynamic absorber may be installed at the tub to directly reduce vibration delivered to the tub. The dynamic absorber may include a mass body, and an elastic member configured to elastically support the mass body for the mass body to move toward the direction of the vibration of the tub to reduce the vibration of the tub.

The drum washing machine may further include a fixation bracket that may be installed at the tub and configured to fix the elastic member. The fixation bracket may include a first fixation bracket installed at one side of a rear side of the tub and a second fixation bracket installed while laterally opposing the first fixation bracket.

The elastic member may include a first elastic member configured to connect between the first fixation bracket and the mass body, and a second elastic member configured to connect between the second fixation bracket and the mass body.

The drum washing machine may further include a friction reducing part configured to minimize friction of the mass body that is moved by the elastic member.

The friction reducing part may include a first slide rail, a second slide rail and a plurality of balls. The first slide rail may be formed at the tub. The second slide rail may be installed at a bottom surface of the mass body to correspond to the first slide rail. The plurality of balls may be provided in between the first slide rail and the second slide rail.

The mass body may include a through-hole formed at a center thereof. The drum washing machine may further include a shaft and a plurality of spherical members. The shaft may be configured to pass through the through-hole of the mass body and connect in between the first fixation bracket and the second fixation bracket. The plurality of spherical members may be provided in between the shaft and the through-hole, so that the mass body slidably moves through the shaft and the plurality of spherical member.

The mass body may be elastically supported at one side and the other side thereof by an elastic member, for example, a spring. The spring may be installed at an outer circumferential surface of the shaft, and include a first spring connectively installed at the first fixation bracket and a second spring connectively installed at the second fixation bracket.

At least one of the first fixation bracket and the second fixation bracket may include a hinge apparatus. One side of the mass body may be rotatably fixed by the hinge apparatus, and the other side of the mass body may be movably installed so as to be moved in a direction toward left and right sides of the tub by the elastic member.

The dynamic absorber may include a casing, a mass body, a plurality of elastic member and a friction reducing part. The casing may form an exterior of the dynamic absorber while being fixed to the tub. The mass body may be provided at an inside the casing. The plurality of elastic members may be fixed to the casing and the mass body to support the mass body. The friction reducing part may be configured to reduce friction of the mass body that is moved by the elastic member. The friction reducing part may include oil provided at an inside the casing.

In accordance with another aspect of the present disclosure, a drum washing machine includes a body, a drum, a tub, and a dynamic absorber. The drum may be rotatably installed at an inside the body. The tub may be installed to vibrate while surrounding the drum. The dynamic absorber may be installed at the rub to directly reduce the vibration delivered to the tub. The dynamic absorber may include a mass body, an elastic member, a fixation bracket and a friction reducing part. The elastic member may elastically support the mass body. The fixation bracket may be installed at the tub and configured to fix the elastic member. The friction reducing part may be provided to minimize friction of the mass body that is moved by the elastic member.

The dynamic absorber may be movably installed at a rear side of the tub so as to be moved to a left and a right side of the tub to reduce a left-to-right vibration of the tub.

The fixation bracket may include a first fixation bracket installed at a rear side of the tub and a second fixation bracket installed while opposing the first fixation bracket.

The elastic member may include a first elastic member configured to connect between the first fixation bracket and the mass body, and a second elastic member configured to connect between the second fixation bracket and the mass body. The mass body may be movably installed to move in a direction toward left and right sides of the tub by the plurality of elastic members.

The friction reducing part may include a first slide rail formed at the tub, a second slide rail installed at a bottom surface of the mass body to correspond to the first slide rail, and a plurality of balls provided in between the first slide rail and the second slide rail.

The mass body may further include a through-hole formed at a center thereof. The drum washing machine may further include a shaft configured to pass through the through-hole of the mass body and connect in between the first fixation bracket and the second fixation bracket, and a plurality of spherical members provided in between the shaft and the through-hole, so that the mass body moves in a direction toward the left and the right side of the tub through the shaft and the plurality of spherical members.

The mass body may be elastically supported at one side and the other side thereof by an elastic member such as a spring. The spring may be installed at an outer circumferential surface of the shaft, and include a first spring connectively installed at the first fixation bracket and a second spring connectively installed at the second fixation bracket.

The fixation bracket may include a plurality of elastic members configured to elastically support the mass body.

As described above, the vibration of a low frequency band at which excessive vibration occurs may be reduced.

In addition, by reducing the excessive vibration of a tub, the gap between a frame and a tub may be reduced, and accordingly, a washing capacity may be increased.

## BRIEF DESCRIPTION OF THE DRAWINGS

These and/or other aspects of the disclosure will become apparent and more readily appreciated from the following description of embodiments, taken in conjunction with the accompanying drawings of which:

FIG. 1 is a cross-sectional view schematically illustrating a drum washing machine in accordance with an embodiment of the present disclosure.

FIG. 2 is a drawing schematically illustrating a drum washing machine provided with a dynamic absorber installed thereto in accordance with an embodiment of the present disclosure.

FIG. 3 is an exploded perspective view schematically illustrating a dynamic absorber in accordance with an embodiment of the present disclosure.

FIG. 4 is a drawing schematically illustrating an operation of a dynamic absorber in accordance with an embodiment of the present disclosure.

FIG. 5 is a perspective view schematically illustrating a dynamic absorber in accordance with another embodiment of the present disclosure.

FIG. 6 is a drawing schematically illustrating an operation of a dynamic absorber in accordance with another embodiment of the present disclosure.

FIGS. 7 to 14 are drawings schematically illustrating a dynamic absorber in accordance with other embodiments of the present disclosure,

## DETAILED DESCRIPTION

Reference will now be made in detail to embodiments of the present disclosure, examples of which are illustrated in the accompanying drawings, wherein like reference numerals refer to like elements throughout.

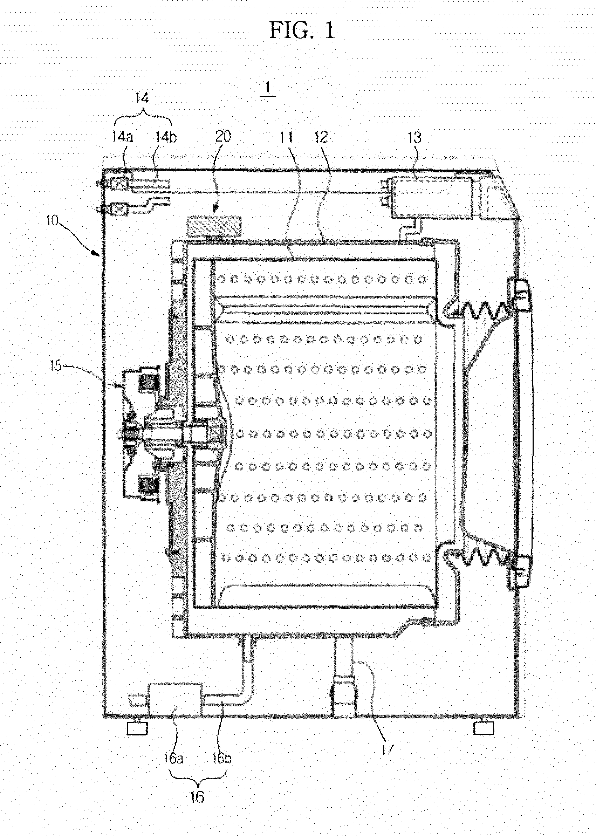

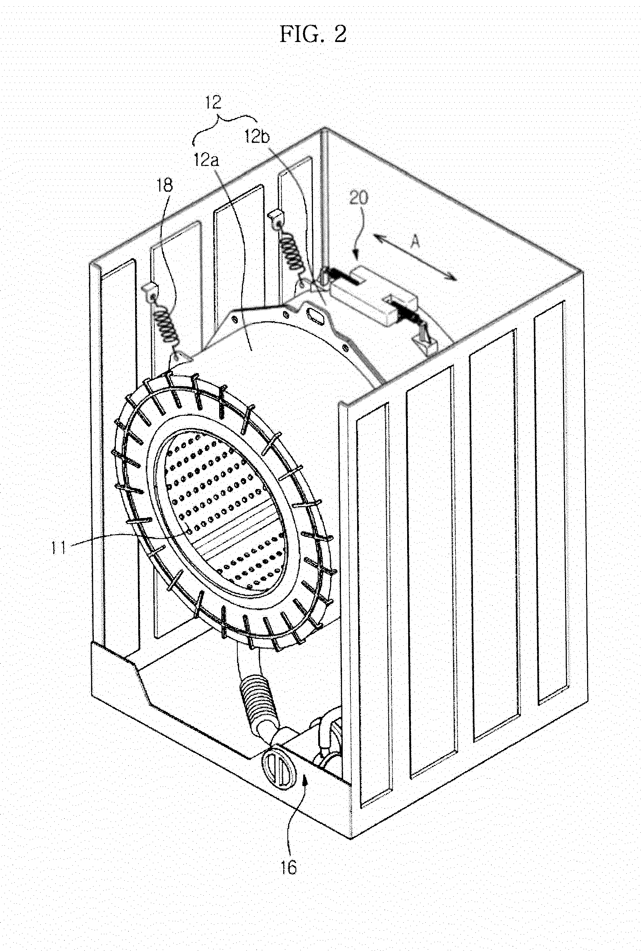

As illustrated on FIGS. 1 to 2, a drum washing machine 1 includes a body 10 forming an exterior, a tub 12 suspendedly installed by a plurality of elastic members 18 such as a spring, at an inside the body 10 and supportively installed by a damper assembly 17 at the same time, a drum 11 rotatably installed at an inside the tub 12 and configured to have washing water and laundry therein, and a driving apparatus 15 to rotate the drum 11.

The tub 12 includes a front tub 12a having an open front surface and a rear tub 12b coupled to the front tub 12a and provided to surround the rear side of the drum 11.

The upper side of the inner portion of the body 10 is provided with a detergent supply apparatus 13 installed therein to accommodate the detergent supplied to an inside the drum 11 and with a water supply apparatus 14 installed therein to supply water to the detergent supply apparatus 13.

The water supply apparatus 14 is installed at an upper side of the tub 12 and is provided to supply washing water to an inner side of the tub 12 and the drum 11, and includes a water supply valve 14a connected to an outside water supply part (not shown) and a water supply pipe 14b configured to connect in between the water supply valve 14a and the detergent supply apparatus 13.

The water supplied through the water supply valve 14a passes through the detergent supply apparatus 13, and is supplied to an inside the tub 12 along with the detergent.

In addition, a lower side of the tub 12 is provided with a drain apparatus 16 installed thereto, and the drain apparatus 16 includes a drain pump 16a configured to drain the washing water to an outside the body 10 and a drain pipe 16b.

As the drum washing machine 1 is operated after inserting laundry into the drum 11, the washing water along with the detergent is supplied into the drum 11 through the water supply pipe 14b and the detergent supply apparatus 13, and then the laundry is being washed as the drum 11 rotates by the driving apparatus 15.

In addition, after a washing cycle is completed, the drum 11 rotates at a high speed, and the laundry is spin-dried. During the spin-dry cycle, the drum 11 rotates at a high speed, and a centrifugal force is developed in proportion to the uneven mass in a lump state, thereby causing the tub 12 of the drum washing machine 1 to vibrate.

Thus, in order to reduce the vibration of the tub 12, a dynamic absorber 20 is installed.

The fundamental and the effect of the dynamic absorber 20 are schematically described hereinafter.

A machinery body m1, which is the subject to the reduction of vibration, vibrates while installed at an elastic body k1. As to decrease the vibration developed from the machinery body m1, a dynamic absorber m2 is coupled to the machinery body m1 through an elastic body k2.

As to decrease the vibration frequency developed from the machinery body m1, the natural frequency of the dynamic absorber m2 may match with the vibration frequency of the machinery body m1.

As the natural frequency of the dynamic absorber m2 and the vibration frequency developed from the machinery body m1 are matched to each other, the vibration energy of the machinery body m1 is absorbed by the dynamic absorber m2, thereby minimizing the vibration of the machinery body m1. Thus, by establishing the resonance points of the two mass bodies same, an additional mass body, that is, the dynamic absorber m2, vibrates in place of a main mass body, that is, the machinery body m1, and reduces the vibration of the machinery body m1.

Here, the natural frequency is determined according to the following formula:

$$\omega n = (k/m)1/2$$

At this time, $\omega n$ represents a natural frequency, k represents an elastic coefficient, and m represents mass.

As seen from the above formula, the elastic coefficient k or the mass m is may be variably changed in order to variably change the natural frequency of the dynamic absorber.

However, the dynamic absorber in general is configured to reduce a high frequency vibration, as a mass body having a light weight conducts a simple harmonic motion to reduce vibration.

An embodiment of the present disclosure is to reduce a low frequency vibration, in other words, to establish the elastic coefficient k of the spring, that is, the spring that vibrates a mass body 21 having a mid weight, at a lower level.

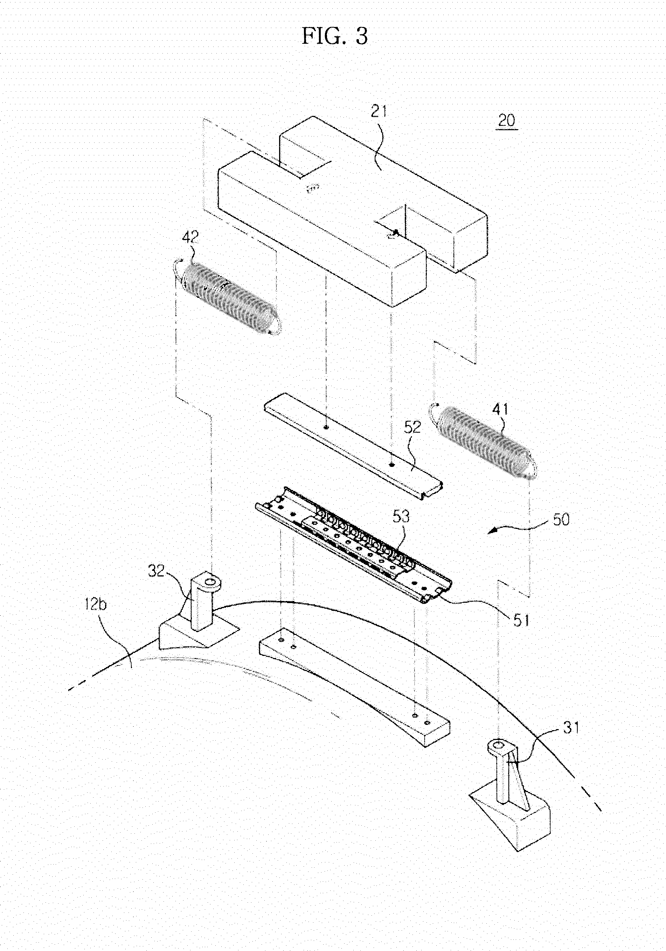

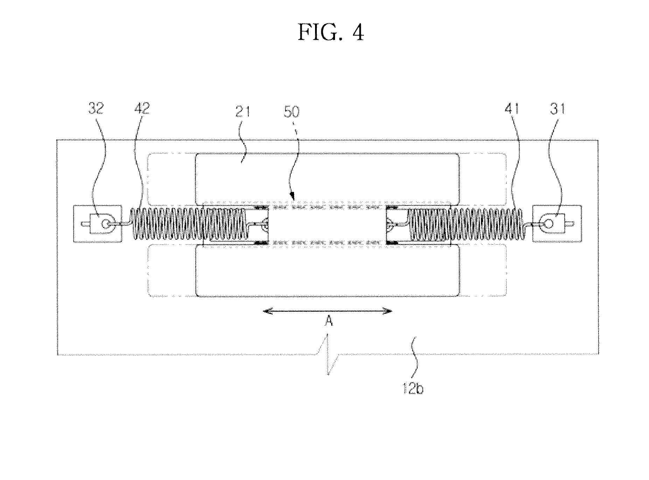

As illustrated on FIGS. 3 to 4, the dynamic absorber 20 according to an embodiment of the present disclosure is installed at an upper surface of the outer side of the rear tub 12b.

The dynamic absorber 20 includes the mass body 21 having a mid weight, an elastic member 40 configured to movably rotatably support the mass body 21 and having a low elastic coefficient k, and a fixation bracket 30 to fix the elastic member 40.

The mass body 21 is installed, while being able to move in a direction toward the left and the right side of the tub 12, to reduce the vibration of the tub 12.

The elastic member 40 may include at least one of a spring or a rubber. However, the elastic member 40 is not limited thereto. For example, any material used to store mechanical energy and be compressed or stretched may be used as the elastic member.

The elastic member 40 has one end thereof fixed to the mass body 21 and the other end thereof fixed to the fixation bracket 30 to elastically support the mass body 21.

The fixation bracket 30 includes a first fixation bracket 31 fixed to one side of the rear tub 12b and a second fixation bracket 32 fixedly installed while laterally opposing the first fixation bracket 31.

The first fixation bracket 31 and the second fixation bracket 32 are installed at the left and the right side of the tub 12 while spaced apart in a predetermined distance from each other.

Thus, the elastic member 40 includes a first elastic member 41 connected in between the first fixation bracket 31 and the mass body 21 and configured to elastically support one side of the mass body 21, and a second elastic member 42 connected in between the second fixation bracket 32 and the mass body 21 and configured to elastically support the other side of the mass body 21.

In addition, a friction reducing part 50 configured to minimize friction is provided so that the elastic member 40 having a low elastic coefficient k may be able to smoothly move the mass body 21.

The friction reducing part 50 includes a first slide rail 51 installed at the tub 12, a second slide rail 52 installed at a bottom surface of the mass body 21 to correspond to the first slide rail 51, and a plurality of balls 53 provided in between the first slide rail 51 and the second slide rail 52.

Thus, when the tub 12 vibrates during a transient period of the spin-dry cycle of the drum washing machine 1, the mass body 21 of the dynamic absorber 20 installed at the rear tub 12b moves in a direction A, that is, toward the left and the right sides of the tub 12, and may reduce the excessive but temporary vibration of the tub 12. The dynamic absorber 20 is configured not to move other than during the transient period of the spin-dry cycle of the drum washing machine 1. During the transient period of the spin-dry cycle of the drum washing machine 1, the dynamic absorber 20, instead of the tub 12, moves in the direction A, that is, toward the left and the right sides of the tub 12, to absorb the vibration of the tub 12.

At this time, the friction in between the mass body 21 and the tub 12 may be minimized by the friction reducing part 50, and the friction reducing part 50 is configured to guide the movement of the mass body 21 in order to move the mass body 21 having a mid weight by using the low elastic coefficient k.

Thus, the dynamic absorber 20 of an embodiment of the present disclosure may be able to move the mass body 21 having a mid weight by using a low elastic coefficient k, thereby directly reducing low frequency vibration.

In addition, the dynamic absorber 20 may be able to reduce the excessive vibration of the tub 12, thereby reducing the gap distance in between the body 10 and the tub 12, so that the size of the drum 11 may be enlarged as much as the reduced gap distance, and therefore, the washing capacity of the drum washing machine 1 may be enhanced.

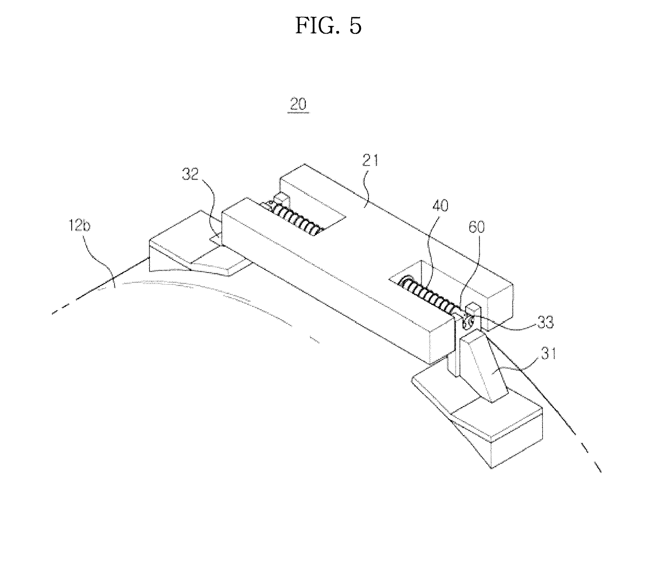

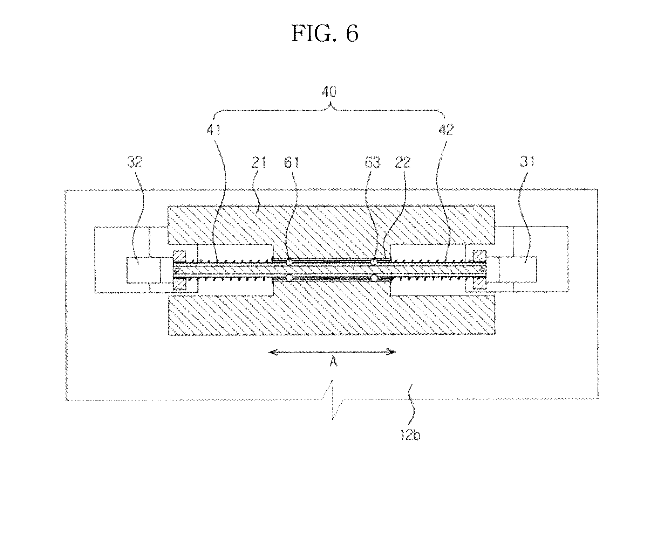

As illustrated on FIGS. 5 to 6, the dynamic absorber 20 according to another embodiment of the present disclosure includes the mass body 21 having a mid weight and provided at a center thereof with a through-hole 22 formed therethrough, a shaft 60 provided to penetrate the through-hole 22 of the mass body 21, a first fixation bracket 31 and a second fixation bracket 32 fixedly installed at the tub 12 to support both end portions of the shaft 60, and an elastic member 40 such as a spring provided to elastically support the mass body 21 in between the first and the second fixation brackets 31 and 32 and the mass body 21.

The outer circumferential surface of the shaft 60 is provided at a middle portion thereof with grooves 61 formed thereon while indented in a circumferential direction thereof, and a plurality of spherical members 63 are installed at the grooves 61.

The first fixation bracket 31 and the second fixation bracket 31 are provided with a shaft supporting part 33 formed thereon to support the both end portions of the shaft 60.

Thus, the shaft 60 is penetratively installed through the through-hole 22 of the mass body 21, and the both end portions of the shaft 60 are fixed through the shaft supporting part 33 of the first and the second fixation brackets 31 and 32.

In addition, the spring 40, which is configured to elastically support the mass body 21 in order for the mass body 21 to move in a direction toward the left and the right side of the tub 12, is installed at an outer circumferential surface of the shaft 60, and includes a first spring 41 configured to support the first fixation bracket 31 and one side of the mass body 21, and a second spring 42 configured to support the second fixation bracket 32 and the other side of the mass body 21.

Thus, the mass body 21 is installed to be able to move in the direction A, that is, toward the left and the right sides of the tub 12 through the shaft 60, and is elastically supported by the first spring 41 and the second spring 42.

The friction in between the mass body 21 and the shaft 60 may be reduced by the plurality of spherical members 63 provided in between the mass body 21 and the shaft 60.

According to the dynamic absorber 20 as such, the friction in between the mass body 21 and the tub 12 may be reduced by using the plurality of spherical members 63, as well as the shaft 60 configured to guide the movement of the mass body 21 so that the mass body 21 having a mid weight may be supported by the spring 60 having low elastic coefficient k, and thus the low frequency vibration of the tub 12 may be reduced.

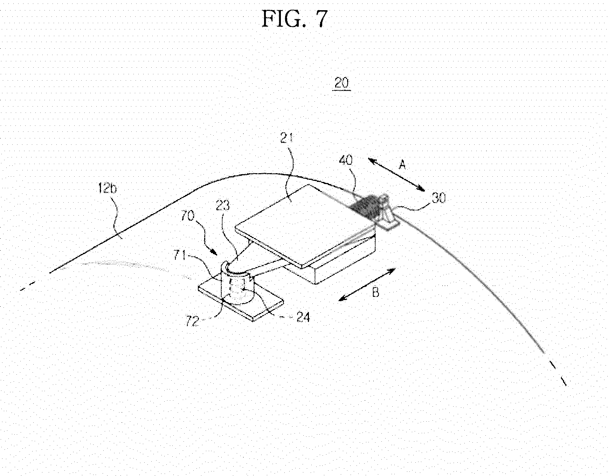

As illustrated on FIG. 7, the dynamic absorber 20 according to another embodiment of the present disclosure includes the mass body 21 having a mid weight, the elastic member 40 configured to movably rotatably support the mass body 21 and having a low elastic coefficient k, a fixation bracket 30 to fix the elastic member 40, and a hinge apparatus 70 rotatably to support the mass body 21.

The fixation bracket 30 may be installed at a predetermined position at an upper surface of the rear tub 12b to fix the elastic member 40.

The hinge apparatus 70 is installed while being spaced apart from the fixation bracket 30 in a predetermined distance in a horizontal direction B of the tub 12.

The hinge apparatus 70 includes a hinge bracket 71 fixed to the tub 12 and a hinge groove 72 formed at an inside the hinge bracket 71 while having a hollow core.

One side of the mass body 21 is provided with a hinge axis connecting part 23 connectively formed thereto. A hinge axis 24 corresponding to the hinge groove 72 is formed on the hinge axis connecting part 23.

Thus, as the hinge axis 24 of the mass body 21 is coupled to the hinge groove 72 of the hinge apparatus 70, the hinge axis connecting part 23 of the mass body 21 is fixed to the hinge groove 72 of the hinge apparatus 70.

In this manner, one side of the mass body 21 is rotatably fixed by the hinge apparatus 70 and the other side of the mass body 21 is rotatably installed to be able to move by the elastic member 40 in the direction B, that is, toward the left and the right sides of the tub 12, and thus, in a case of the vibration of the tub 12 occurs, the mass body 21 of the dynamic absorber 20 moves toward the left and the right sides of the tub 12, thereby reducing the excessive but temporary vibration of the tub 12.

The movement of the dynamic absorber 20 in reducing the excessive vibration is described according to the structure shown above, thus the description will be omitted in order to avoid redundancy.

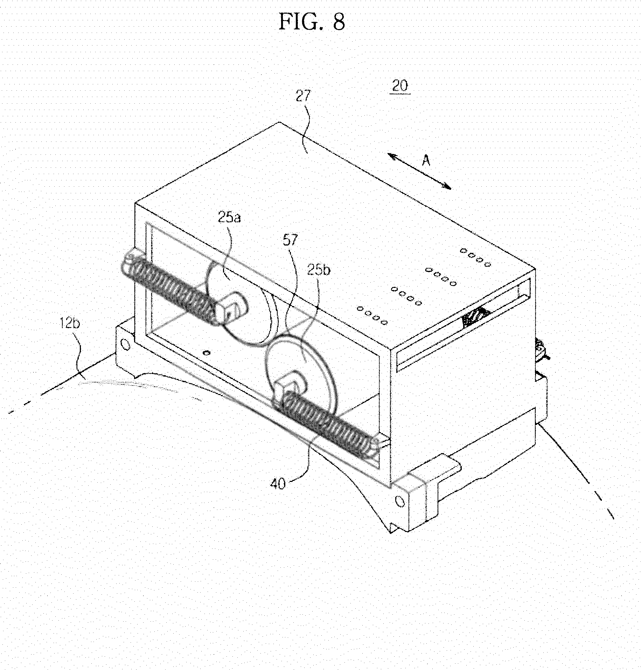

As illustrated on FIG. 8, the dynamic absorber 20 according to another embodiment of the present disclosure includes a casing 27, a first mass body 25a having a shape of a roller and fixed to one side of the inside of the casing 27 to be elastically supported by a plurality of elastic members 40, a second mass body 25b having a shape of a roller and fixed to the other side of the inside of the casing 27 to be elastically supported by the plurality of elastic members 40, and a guide 57 having a shape of a panel and installed in between the first mass body 25a and the second mass body 25b.

Each of the plurality of elastic members 40 configured to fix the first mass body 25a and the second mass body 25b to the casing 27 is provided to elastically support the first mass body 25a and the second mass body 25a, which is connected a respective one of the plurality of elastic members 40, toward an outer direction of the casing 27.

Thus, the direction of the movements of the first mass body 25a and the second mass body 25a may be same.

The guide 57 is provided between the first mass body 25a and the second mass body 25b in the form of a band having a shape of a letter 'S' and is configured to elastically support the first mass body 25a and the second mass body 25a toward an inner side direction thereof, so that the first mass body 25a and the second mass body 25a are not spaced apart from each other. At this time, the guide 57 may minimize the friction in between the first mass body 25a and the second mass body 25b, and thus, the low frequency vibration therein between may be reduced.

The casing 27 is installed at an upper surface of the rear tub 12b, and is capable of having the first mass body 25a and the second mass body 25b at an inside thereof move toward direction A, that is, the left and the right sides of the tub 12.

The movement of the dynamic absorber 20 in reducing the excessive vibration according to the structure described above may be sufficiently predicted from the description explained above, thus the description will be omitted in order to avoid redundancy.

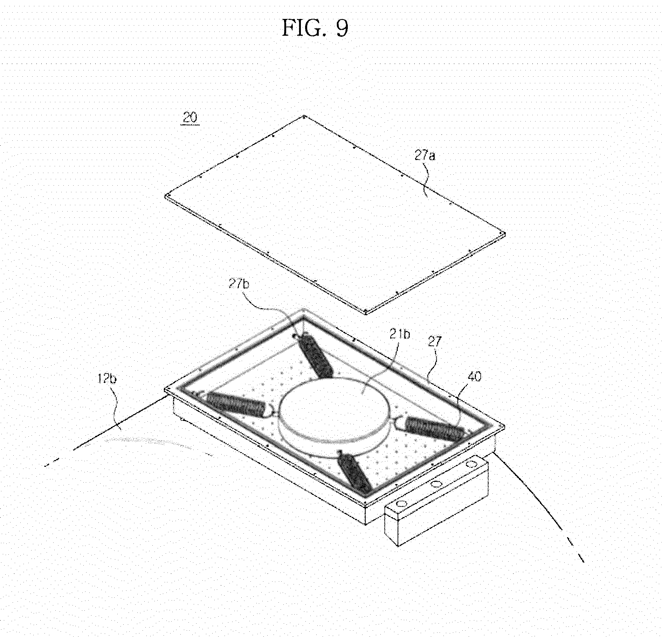

As illustrated on FIG. 9, the dynamic absorber 20 according to another embodiment of the present disclosure includes the casing 27, a mass body 21b having a shape of a disc and fixed to an inside of the casing 27 to be elastically supported by a plurality of elastic members 40, and oil O to minimize the friction of the mass body 21b.

The casing 27 is provided with a hollow core formed therein and is formed in a shape of a hexahedron having an open upper surface thereof. A panel 27a is coupled to the open upper surface of the casing 27 to close off from an outside thereof.

At this time, the panel 27a may be formed with transparent material to check an inside the casing 27.

The casing 27 is provided at each corner thereof with an elastic member supporting part 27b to which the plurality of elastic members 40 may be fixed.

The mass body 21b having a shape of a disc may be formed at a mid-weight level, while the elastic coefficient k of the elastic member 40 supporting the mass body 21b may be at a low level.

At this time, the friction in between the mass body 21b and the casing 27 is minimized by the oil O.

Thus, the mass body 21b having a mid weight may be moved by using a low elastic coefficient k, thereby reducing the low frequency vibration of the tub 12.

In addition, the dynamic absorber 20 according to an embodiment of the present disclosure may be configured to enable a mass body 21 c, a mass body 21 d, and a mass body 21 e to move not only in the direction B, that is, toward the left and the right sides of the tub 12, but also in all directions, and therefore, the dynamic absorber 20 may be installed in various directions depending on the displacement direction intended to reduce vibration.

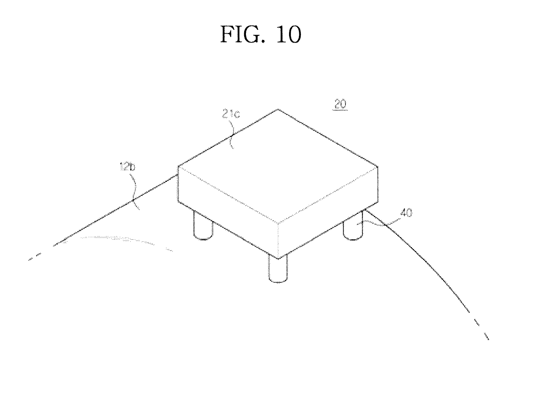

As illustrated on FIGS. 10 to 12, the dynamic absorber 20 according to other embodiments of the present disclosure includes the mass body 21c, the mass body 21d, and the mass body 21e having a mid weight and various shapes, and the elastic member 40 configured to elastically support the mass body 21 c, the mass body 21 d, and the mass body 21 e so that the mass body 21c, the mass body 21d, and the mass body 21e may be capable of moving.

The elastic member 40 may include at least one of a spring or a rubber.

The shapes of the mass body 21 c, the mass body 21 d, and the mass body 21 e may be provided in various shapes. However, the shapes of the mass body 21 c, the mass body 21 d, and the mass body 21e may be provided in a horizontal state while being elastically supported by the elastic member 40.

The mass body 21 c is elastically supported by the plurality of elastic members 40 that are provided at a bottom surface of the mass body 21c and includes a rubber column having a shape of a cylinder (see FIG. 10).

In addition, the mass body 21 d is provided at a central portion of the upper surface thereof with a supportive protrusion 21 d' connected to the elastic member 40. The elastic member 40 including a plurality of rubber bands may be connectively installed to the supportive protrusion 21 d'.

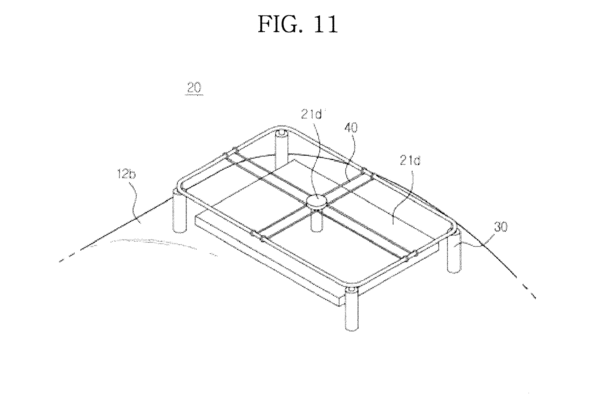

At this time, the elastic member 40 is connectively installed at the fixation bracket 30 which is fixed to the tub 12, and the fixation bracket 30 may be provided at a predetermined height allowing the mass body 21 d to be suspended (see FIG. 11).

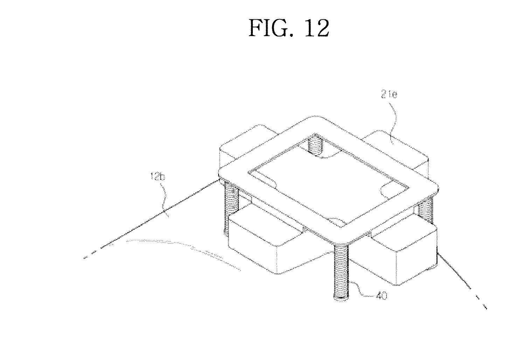

In addition, the mass body 21e is elastically supported by the plurality of elastic members 40 that are provided at a bottom surface of the mass body 21e, and includes a spring column (see FIG. 12).

Thus, the mass body 21c, the mass body 21d, and the mass body 21 e having a mid weight may be moved by using a low elastic coefficient k, thereby reducing the low frequency vibration of the tub 12.

In addition, the dynamic absorber 20 according to other embodiments of the present disclosure is configured to enable the mass body 21 c, the mass body 21 d, and the mass body 21 e to move not only in the direction B, that is, toward the left and the right sides of the tub 12, but also in all directions, and therefore, the dynamic absorber 20 may be installed in various directions depending on the displacement direction intended to reduce vibration.

Thus, the dynamic absorber 20 may be variably installed other than at the rear tub 12b.

The movement of the dynamic absorber 20 in reducing the excessive vibration according to the structure described above may be sufficiently predicted from the description explained above, thus the description will be omitted in order to avoid redundancy.

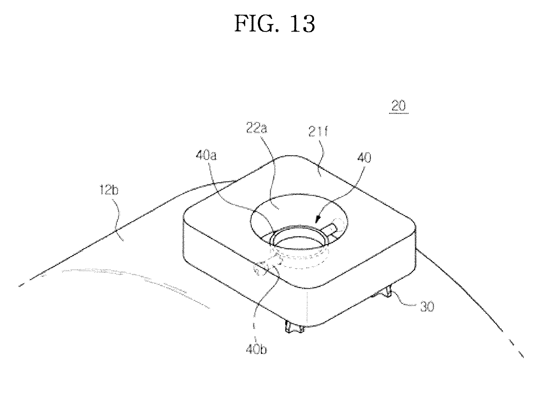

As illustrated on FIG. 13, the dynamic absorber 20 according to another embodiment of the present disclosure includes a mass body 21f having a mid weight, the fixation bracket 30 to support the bottom surface of the mass body 21f, and the elastic member 40 to elastically support the mass body 21f.

The mass body 21f is provided at a center thereof with a hollow hole 22a formed thereon, and the elastic member 40 is installed at the hollow hole 22a.

The elastic member 40 includes a circular part 40a formed in a shape of a ring to be capable of surrounding the water supply pipe (not shown) that is connected at the upper side of the tub 12, and a supporting part 40b connecting in between the circular part 40a and the mass body 21f.

Thus, the dynamic absorber 20 having the structure as described above has a structure capable of not only moving the mass body 21f in the direction B, that is, toward the left and the right sides of the tub 12, but also in all directions and therefore, the dynamic absorber 20 may be installed in various directions depending on the displacement direction intended to reduce vibration.

In addition, no additional space may be needed in installing the dynamic absorber 20 as the dynamic absorber 20 is installed at the water supply pipe (not shown) connected to the upper side of the tub 12, and thereby the efficient use of the space thereof may be achieved.

The movement of the dynamic absorber 20 in reducing the excessive vibration according to the structure described above may be sufficiently predicted from the description explained above, thus the description will be omitted in order to avoid redundancy.

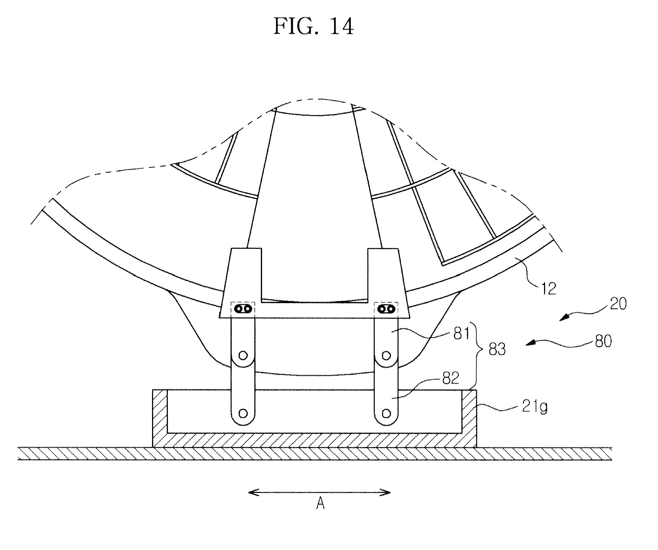

As illustrated on FIG. 14, the dynamic absorber 20 according to another embodiment of the present disclosure is installed at a lower portion of the tub 12.

The dynamic absorber 20 includes a mass body 21 g having a mid weight, and a hinge apparatus 80 to hinge the mass body 21 g to the tub 12.

The hinge apparatus 80 includes a hinge link unit 83 which includes a first hinge link 81 rotatably connected to the tub 12 and a second hinge link 82 rotatably connected to the first hinge link 81 and the mass body 21g. The hinge apparatus 80 may include a plurality of hinge link units. For example, FIG. 14 shows the hinge apparatus having a pair of hinge link units. Further, although FIG. 14 shows the hinge link unit includes only two hinge links, a number of hinge links are not limited thereto. The hinge link unit may include one or more hinge links. For example, the hinge link unit may have a third hinge link (not shown) rotatably connected to the second hinge link 82 and the mass body 21g. In this example, the second hinge unit is rotatably connected to the first hinge link 81 and the third hinge link.

The second hinge link 82 is rotatably connected to the mass body 21 g.

Thus, the dynamic absorber 20, in a case when the tub 12 vibrates, may be able to move in the direction A, that is, toward the left and the right sides of the tub 12, by the first hinge link 81 and the second hinge link 82 that are connected to the tub 12.

The dynamic absorber 20 as the above may be able to reduce the left-to-right vibration of the tub 12, and may be installed at the front or the rear of the tub 12.

The movement of the dynamic absorber 20 in reducing the excessive vibration according to the structure described above may be sufficiently predicted from the description explained above, thus the description will be omitted in order to avoid redundancy.

Although a few embodiments of the present disclosure have been shown and described, it would be appreciated by those skilled in the art that changes may be made in these embodiments without departing from the principles and spirit of the disclosure, the scope of which is defined in the claims and their equivalents.

## Claims

1. A drum washing machine, comprising:

   a body;
   a drum rotatably installed at an inside the body;
   a tub installed in a way to vibrate while surrounding the drum; and
   a dynamic absorber installed at the tub to directly reduce vibration delivered to the tub,

   wherein the dynamic absorber, comprises:

   a mass body; and
   an elastic member configured to elastically support the mass body for the mass body to move toward a direction of the vibration of the tub to reduce the vibration of the tub.

2. The drum washing machine of claim 1, further comprising:

   a fixation bracket installed at the tub and configured to fix the elastic member ,

   wherein the fixation bracket, comprises:

   a first fixation bracket installed at one side of a rear side of the tub; and
   a second fixation bracket installed while laterally opposing the first fixation bracket.

3. The drum washing machine of claim 2, wherein the elastic member comprises:

   a first elastic member configured to connect between the first fixation bracket and the mass body; and
   a second elastic member configured to connect between the second fixation bracket and the mass body.

4. The drum washing machine of claim 1, wherein further comprises:

   a friction reducing part configured to minimize friction of the mass body that is moved by the elastic member.

5. The drum washing machine of claim 4, wherein the friction reducing part comprises:

   a first slide rail formed at the tub;
   a second slide rail installed at a bottom surface of the mass body to correspond to the first slide rail; and
   a plurality of balls provided in between the first slide rail and the second slide rail.

6. The drum washing machine of claim 2, wherein the mass body comprises a through-hole formed at a center thereof,
   wherein the drum washing machine further comprises:

   a shaft configured to pass through the through-hole of the mass body and connect in between the first fixation bracket and the second fixation bracket, and
   a plurality of spherical members provided in between the shaft and the through-hole, so that the mass body slidably moves through the shaft and the plurality of spherical member.

7. The drum washing machine of claim 6, wherein the mass body is elastically supported at one side and the other side thereof by an elastic member,
   wherein the elastic member is installed at an outer circumferential surface of the shaft, and comprises a first elastic member connectively installed at the first fixation bracket and a second elastic member connectively installed at the second fixation bracket.

8. The drum washing machine of claim 2, wherein at least one of the first fixation bracket and the second fixation bracket comprises a hinge apparatus, and one side of the mass body is rotatably fixed by the hinge apparatus, and the other side of the mass body is movably installed so as to be moved in a direction toward left and right sides of the tub by the elastic member.

9. The drum washing machine of claim 1, wherein the dynamic absorber comprises:

   a casing forming an exterior of the dynamic absorber and fixed to the tub; a mass body provided at an inside the casing; a plurality of elastic members fixed to the casing to support the mass body; and a friction reducing part configured to reduce friction of the mass body that is moved by the elastic member,
   wherein the friction reducing part comprises oil provided at an inside the casing.

10. The drum washing machine of claim 1, wherein the dynamic absorber is movably installed at a rear side of the tub so as to be moved to a left and a right side of the tub to reduce a left-to-right vibration of the tub.

**11.** The drum washing machine of claim 2, wherein the fixation bracket comprises a plurality of elastic members configured to elastically support the mass body.

# FIG. 1

FIG. 2

## FIG. 3

FIG. 4

FIG. 5

FIG. 6

FIG. 7

FIG. 8

# FIG. 9

FIG. 10

## FIG. 11

FIG. 12

EP 2 592 183 A1

FIG. 13

22

FIG. 14

Europäisches
Patentamt

European
Patent Office

Office européen
des brevets

# EUROPEAN SEARCH REPORT

**Application Number**

EP 12 19 0829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/151398 A1 (FANG HUIYU [US] ET AL) 18 June 2009 (2009-06-18) | 1-4,9-11 | INV.<br>D06F37/22<br>D06F37/26 |
| Y | * the whole document * | 5-8 | |
| Y | US 4 583 621 A (TANGORRA GIORGIO [IT]) 22 April 1986 (1986-04-22)<br>* the whole document * | 5-7 | |
| X | WO 2011/064348 A1 (INDESIT CO SPA [IT]; FRATERNALE GIUSEPPE [IT]; RESTA FERRUCCIO [IT]; B) 3 June 2011 (2011-06-03) | 1-4,10, 11 | |
| Y | * the whole document * | 8 | |
| X | DE 33 23 148 A1 (PIRELLI [IT]) 29 December 1983 (1983-12-29)<br>* the whole document * | 1-3,10, 11 | |
| X | WO 2007/147869 A1 (ARCELIK AS [TR]; AKBAS M OMER [TR]) 27 December 2007 (2007-12-27)<br>* the whole document * | 1,10 | |
| A | US 5 924 312 A (VANDE HAAR EVAN R [US]) 20 July 1999 (1999-07-20)<br>* the whole document * | 1-4,9-11 | TECHNICAL FIELDS<br>SEARCHED (IPC)<br><br>D06F |
| A | US 2008/295545 A1 (KIM JAE HYUN [KR] ET AL) 4 December 2008 (2008-12-04)<br>* the whole document * | 1-11 | |
| A | US 5 016 409 A (SATO TAKANORI [JP]) 21 May 1991 (1991-05-21)<br>* the whole document * | 1-11 | |

The present search report has been drawn up for all claims

| Place of search | Date of completion of the search | Examiner |
|---|---|---|
| Munich | 11 February 2013 | Prosig, Christina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 19 0829

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2013

| Patent document cited in search report | | Publication date | Patent family member(s) | | Publication date |
|---|---|---|---|---|---|
| US 2009151398 | A1 | 18-06-2009 | CA | 2645978 A1 | 18-06-2009 |
| | | | EP | 2072653 A1 | 24-06-2009 |
| | | | US | 2009151398 A1 | 18-06-2009 |
| US 4583621 | A | 22-04-1986 | AR | 231580 A1 | 28-12-1984 |
| | | | BR | 8401599 A | 13-11-1984 |
| | | | DE | 3412894 A1 | 11-10-1984 |
| | | | DK | 108084 A | 09-10-1984 |
| | | | ES | 278702 U | 16-10-1984 |
| | | | FR | 2544040 A1 | 12-10-1984 |
| | | | GB | 2137729 A | 10-10-1984 |
| | | | JP | 59194142 A | 02-11-1984 |
| | | | NL | 8400550 A | 01-11-1984 |
| | | | NO | 841365 A | 09-10-1984 |
| | | | SE | 8401875 A | 09-10-1984 |
| | | | US | 4583621 A | 22-04-1986 |
| WO 2011064348 | A1 | 03-06-2011 | EP | 2504480 A1 | 03-10-2012 |
| | | | WO | 2011064348 A1 | 03-06-2011 |
| DE 3323148 | A1 | 29-12-1983 | DE | 3323148 A1 | 29-12-1983 |
| | | | IT | 1154013 B | 21-01-1987 |
| WO 2007147869 | A1 | 27-12-2007 | TR | 200808236 T1 | 23-02-2009 |
| | | | WO | 2007147869 A1 | 27-12-2007 |
| US 5924312 | A | 20-07-1999 | CA | 2252263 A1 | 23-06-1999 |
| | | | US | 5924312 A | 20-07-1999 |
| US 2008295545 | A1 | 04-12-2008 | EP | 2011912 A1 | 07-01-2009 |
| | | | US | 2008295545 A1 | 04-12-2008 |
| US 5016409 | A | 21-05-1991 | CA | 1308750 C | 13-10-1992 |
| | | | CN | 1032208 A | 05-04-1989 |
| | | | FR | 2618823 A1 | 03-02-1989 |
| | | | GB | 2208419 A | 30-03-1989 |
| | | | US | 5016409 A | 21-05-1991 |

EPO FORM P0459

For more details about this annex : see Official Journal of the European Patent Office, No. 12/82